# EUROPÄISCHE PATENTANMELDUNG

(11) **EP 0 835 734 A1**
(43) Veröffentlichungstag der Anmeldung: **15.04.1998**
(21) Anmeldenummer: 97115604.7
(22) Anmeldetag: 09.09.1997
(51) Int. Cl.: B29C 47/10, B29C 47/50, B29C 47/74

(54) **Verfahren zur Herstellung eines insbesondere mit Zusätzen versehenen Kunststoffs sowie Extruder zur Durchführung des Verfahrens**

(30) Priorität: 16.09.1996 DE 19637762; 19.09.1996 DE 19638243
(71) Anmelder: Kannegiesser KMH Kunststofftechnik GmbH, 32429 Minden (DE)
(72) Erfinder: Gleich, Klaus, Dr., 32423 Minden (DE); Heinz, Engelbert, 32602 Vlotho (DE)
(74) Vertreter: Möller, Friedrich, Dipl.-Ing.

(57) **Zusammenfassung**

Die Herstellung eines insbesondere mit Fasern versehenen Kunststoffs erfolgt vielfach auf einem Extruder (10). Dabei haben sich verschiedene Probleme herauskristallisiert. Beispielsweise ist es problematisch, lange bzw. endlose Verstärkungsfasern, beispielsweise Rovings (27), in den Kunststoff einzuarbeiten. Zum einen brechen die Fasern so sehr, daß sie nur noch über sehr geringe Längen verfügen. Zum anderen hat es sich als schwierig erwiesen, die Fasern ausreichend zu imprägnieren.

Erfindungsgemäß wird der Kunststoff zum Zuführen von Fasern bereichsweise an einer Plastifizierschnecke (11) vorbeigeführt. Erreicht wird das durch eine neben der Plastifizierschnecke (11) angeordnete Nebenschnecke (18). Die Nebenschnecke (18) ermöglicht es, den Kunststoff außerhalb der Plastifizierschnecke (11) gezielt mit Fasern zu versehen und die Nebenschnecke (18) so auszubilden, daß sie die Voraussetzungen für eine gute Verbindung und Vermischung des Kunststoffs mit den Zusätzen, insbesondere eine gute Imprägnierung von Fasern, gewährleistet.

## Beschreibung

Die Erfindung betrifft ein Verfahren zur Herstellung eines insbesondere mit Zusätzen versehenen Kunststoffs gemäß dem Oberbegriff des Anspruchs 1 bzw. 6 und einen Extruder zur Durchführung des Verfahrens gemäß dem Oberbegriff des Anspruchs 10.

Kunststoffe wie zum Beispiel Thermoplaste, Duroplaste und Elastomere werden zur Verbesserung ihrer Eigenschaften vielfach mit Zusätzen versehen. Insbesondere werden Kunststoffe verstärkt durch Fasern wie Glasfasern, Kohlefasern, Aramitfasern, Naturfasern und Kunststoffasern. Derartige Fasern werden entweder als Endlosfasern, geschnittene Fasern oder Mattenstücken den Kunststoffen zugesetzt.

Es sind verschiedene Möglichkeiten der Herstellung von Kunststoffen mit Zusätzen bekannt. Die Erfindung bezieht sich auf eine dieser bekannten Möglichkeiten, mit der der Kunststoff während der Plastifizierung im Extruder mit Zusätzen versehen wird. Die bekannten Verfahren dieser Art zur Durchführung dieser Verfahren dienender Extruder haben verschiedene Nachteile. Zum einen mangelt es an der Homogenität und Imprägnierung der Kunststoffe bzw. Zusätze. Zum anderen werden zugesetzte Fasern gebrochen, wodurch eine unzureichende Verstärkung des Kunststoffs erreichbar ist.

Der Erfindung liegt die Aufgabe zugrunde, ein Verfahren zur Herstellung eines verstärkten Kunststoffs und einen entsprechenden Extruder zu schaffen, womit zum einen homogene Kunststoffe mit Zusätzen herstellbar sind und zum anderen kein nennenswerter Bruch der zur Verstärkung dienenden Fasern eintritt.

Ein Verfahren zur Lösung dieser Aufgabe weist die Maßnahmen des Anspruchs 1 auf. Demnach wird der Kunststoff zum Dispergieren und/oder zur Zufuhr von Zusätzen bereichsweise an der Plastifizierschnecke vorbeigeführt. Dadurch wird die Möglichkeit geschaffen, außerhalb bzw. neben der Plastifizierschnecke den Kunststoff und/oder die Zusätze gezielt und intensiv zu behandeln und miteinander in Verbindung zu bringen (zu imprägnieren).

Gemäß einer Weiterbildung des erfindungsgemäßen Verfahrens wird zum Vorbeiführen des Kunststoffs an der Plastifizierschnecke eine Nebenschnecke verwendet. Die vorzugsweise separate Nebenschnecke hat den Vorteil, daß sie abweichend von der Plastifizierschnecke ausgebildet sein kann und sich dadurch besser den Erfordernissen anpassen läßt als die Plastifizierschnecke.

Beim bevorzugten Verfahren ist vorgesehen, im Bereich der Nebenschnecke zur Verstärkung dienende Fasern, insbesondere endlose Faserstränge, dem Kunststoff zuzuführen. Hierbei bietet die Nebenschnecke die Möglichkeit, Endlosfasern so einzuziehen und in der geschmolzenen Kunststoffmasse einzuarbeiten, daß sie einerseits eine maximal mögliche Länge aufweisen und andererseits intensiv imprägniert werden.

Als besonders vorteilhaft hat es sich erwiesen, der Nebenschnecke eine drucklose Zone zuzuordnen, in der Fasern, insbesondere Endlosfasern, in die aufgeschmolzene Kunststoffmasse eingebracht werden. Vor allem Endlosfasern können dadurch die Nebenschnecke umschlingen und so in die aufgeschmolzene Kunststoffmasse eingebracht werden. Vorzugsweise erstreckt sich die drucklose Zone bis hin zur Plastifizierschnecke, wodurch eine schonende Übergabe der Endlosstränge von der Nebenschnecke an die Plastifizierschnecke gewährleistet ist. Unter "drucklose Zone" ist in diesem Zusammenhang - und auch im Nachfolgenden - eine Zone zu verstehen, in der nur so viel Druck herscht, daß der Kunststoff weitertransportiert wird. Es herscht in dieser Zone aber kein Überdruck, Standdruck und/oder Gegendruck.

Ein weiteres Verfahren zur Lösung der der Erfindung zugrundeliegenden Aufgabe weist die Maßnahmen des Anspruchs 6 auf. Dadurch, daß dem Kunststoff im Bereich der Plastifizierungsschnecke Zusätze wie beispielsweise Fasern oder Rovings kontinuierlich, insbesondere endlos, zugeführt werden, kommt es zu einer wirksamen Verbindung der Verstärkungen mit dem Kunststoff. Vor allem aber wird verhindert, daß die Zusätze so sehr zerbrechen, daß im Kunststoff nur noch kurze Stückchen übrig bleiben.

Gemäß einer Weiterbildung des Verfahrens ist vorgesehen, die Zusätze dem mindestens teilweise plastifizierten Kunststoff im Bereich einer drucklosen Zone der Plastifizierschnecke zuzuführen. Dadurch ist zum einen möglich, die Plastifizierschnecke mit einer nach außen offenen Öffnung zur endlosen Zufuhr der Fasern oder Rovings zu versehen. Zum anderen wird eine besonders gute und wirkungsvolle Imprägnierung der Fasern oder Rovings auf Ihre gesamte Länge erreicht.

In Weiterbildung aller Verfahren, und zwar insbesodere nach dem Anspruch 1 und dem Anspruch 6, kann vorgesehen sein, daß die endlos zugeführten Fasern bzw. Rovings bei der Zufuhr zur Plastifizierschnecke geschnitten werden in Rovings bzw. Fasern endlicher Länge. Dies kann im einfachsten Falle geschehen an der Innenkante der sich im Gehäuse befindlichen Zuführung für die endlosen Fasern bzw. Rovings zur Schnecke. Dazu werden die Rovings an dieser Innenkante der Zuführöffnung im Gehäuse immer dann geschnitten, wenn eine Schneckenwendel der Schnecke unter der Zuführöffnung entlangwandert. Die endlosen Fasern bzw. Rovings werden dadurch gezielt abgeschert. Die Länge der Fasern bzw. Rovings ergibt sich aus der Schneckengeometrie, insbesondere die Steigung der Schneckenwendel der Plastifizierschnecke bzw. Nebenschnecke.

Ein Extruder zur Lösung der der Erfindung zugrundeliegenden Aufgabe weist die Merkmale des Anspruchs 10 auf. Durch die Nebenschnecke in Verbindung mit Mitteln zum Überleiten des Kunststoffs von der Plastifizierschnecke zur Nebenschnecke und zurück (mit Zusätzen) wird eine Art Nebenstrecke für den Kunststoff geschaffen, die es ermöglicht, den Kunststoff gezielt zu behandeln, unter den geforderten Voraussetzungen mit Zusätzen zu versehen und die Zusätze in der erforderlichen Weise in den Kunststoff einzuarbeiten, insbesondere zu imprägnieren, zu dispergieren und/oder zu mischen.

Die vorzugsweise parallel zur Plastifizierschnecke verlaufende Nebenschnecke verfügt über ein eigenes Nebenschneckengehäuse, das mit dem Plastifiziergehäuse bereichsweise in Verbindung steht. Somit hat jede Schnecke ein eigenes Gehäuse, das die Nebenschnecke von der Plastifizierschnecke trennt. Beide Schnecken stellen dadurch baulich selbständige Einheiten dar, die bei Bedarf für sich repariert werden können.

Die Mittel zum Überleiten des Kunststoffs bzw. mit Zusätzen versehenen Kunststoffs von der Plastifizierschnecke zur Nebenschnecke bzw. umgekehrt sind bei einer bevorzugten Weiterbildung der Vorrichtung als Übergangsöffnungen ausgebildet. Die Übergangsöffnungen sind zweckmäßigerweise in der Gehäusewandung des Plastifiziergehäuses und des Nebenschneckengehäuses angeordnet, und zwar so, daß durch zueinander gerichtete Ausschnitte in den Wandungen beider Gehäuse der Kunststoff (gegebenenfalls mit den Zusätzen) zur Nebenschnecke und anschließend von dieser zurück zur Plastifizierschnecke gelangen kann.

Bei einer Ausgestaltung des Extruders kann das Nebenschneckengehäuse eine Öffnung zur Zufuhr von Fasern, insbesondere Endlosfasern, zur Nebenschnecke aufweisen. Dadurch ist eine gezielte Zufuhr der Fasern, insbesondere Endlosfasern zum Extruder gewährleistet, und zwar dort, wodurch eine entsprechende Gestaltung der Nebenschnecke die Voraussetzung für eine zerstörungsfreie Zufuhr der Fasern zum Kunststoff und eine intensive Imprägnierung der bietet.

Es ist alternativ denkbar, die Nebenschnecke mit einer Dispergierschnecke zu versehen. Diese dient dazu, Kunststoffmischungen zu dispergieren, wobei die Nebenschnecke diesen Vorgang begünstigt, weil das Dispergieren sich im Bereich der Nebenschnecke effektiver durchführen läßt als im Bereich der Plastifizierschnecke.

Im folgenden werden bevorzugte Ausführungsbeispiele erfindungsgemäßer Extruder und Verfahren zur Herstellung von Kunststoff unter Bezugnahme auf die Zeichnung näher erläutert. In der Zeichnung zeigen:
- Fig. 1: einen schematischen Längsschnitt eines ersten Ausführungsbeispiels eines Extruders,
- Fig. 2: ein zweites Ausführungsbeispiel eines Extruders in einem Längsschnitt analog zur Fig. 1, und
- Fig. 3: ein drittes Ausführungsbeispiel eines Extruders in einem Längsschnitt analog zu den Fig. 1 und 2.

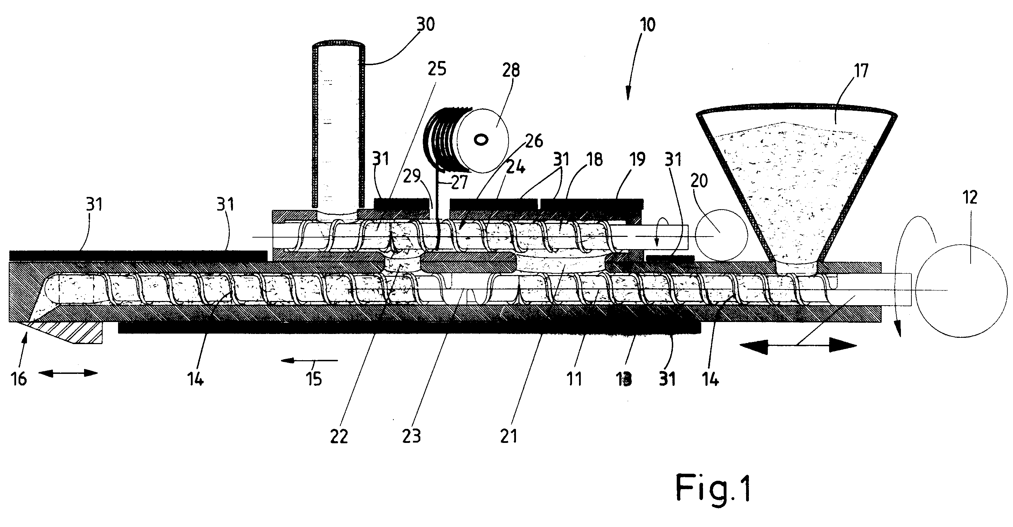

Die Fig. 1 bis 3 zeigen schematisch einen Teil eines Extruders. Die gezeigten Extruder dienen zum Aufschmelzen von Kunststoffen unterschiedlicher Art, insbesondere Thermoplaste, Duroplaste und Elastomere. Gleichzeitig dient der Extruder dazu, Kunststoffe mit einem oder mehreren Zusätzen zu versehen oder Kunststoffe in irgendeiner Weise beim Aufschmelzen zu behandeln, beispielsweise zu dispergieren. Die aufgeschmolzenen und mit Zusätzen versehen bzw. behandelten Kunststoffe werden von Extruder unter Druck aus einem verschließbaren Mundstück ausgetragen.

In der Fig. 1 ist schematisch ein Teil eines Extruders 10 dargestellt, der dazu dient, Kunststoff aufzuschmelzen und mit Zusätzen in Form von zur Verstärkung des Kunststoffs dienenden Fasern zu versehen. Es geht dabei sowohl um Endlosfasern als auch um geschnittene Fasern oder auch Matten- bzw. Gewebestücke und Holzmehl oder dergleichen.

Der Extruder 10 verfügt über eine Plastifizierschnecke 11, die durch einen schematisch dargestellten Motor 12 drehbar in einem Plastifiziergehäuse 13 gelagert ist. Die Plastifizierschnecke 11 ist im Außenumfang mit einer Schneckenwendel 14 versehen, deren Steigung derart ausgebildet ist, daß zusammen mit einer entsprechenden Antriebsdrehrichtung des Motors 12 der Kunststoff einschließlich später zugesetzter Fasern in Extrusionsrichtung 15 (das ist in der Fig. 1 von rechts nach links) zum verschließbaren Mundstück 16 transportierbar ist. Der noch unplastifizierte Kunststoff wird beispielsweise in Form von Granulat dem Eingang der Plastifizierschnecke 11, nämlich dem dem verschließbaren Mundstück 16 gegenüberliegenden Ende der Plastifizierschnecke 11, zugeführt, und zwar im gezeigten Ausführungsbeispiel über einen Trichter 17.

Erfindungsgemäß ist der Plastifizierschnecke 11 eine Nebenschnecke 18 zugeordnet. Die Nebenschnecke 18 ist in einem separaten Nebenschneckengehäuse 19 angeordnet. Das Nebenschneckengehäuse 19 und das Plastifiziergehäuse 13 sind miteinander verbunden, und zwar derart, daß sie in ihren zueinander gerichteten Wandungen zusammenliegen. Dadurch verlaufen die Längsmittelachsen der Plastifizierschnecke 11 und der Nebenschnecke 18 mit Abstand parallel zueinander. In der Länge ist die Nebenschnecke 18 kürzer ausgebildet als die Plastifizierschnecke 11, verfügt nämlich über etwa die halbe Länge. Angeordnet ist die kürzere Nebenschnecke 18 etwa im mittleren Bereich der längeren Plastifizierschnecke 11. Die Nebenschnecke 18 verfügt im gezeigten Ausführungsbeispiel über einen eigenen separaten Antrieb, nämlich einen ebenfalls nur schematisch dargestellten Motor 20.

Die Nebenschnecke 18 ist mit der Plastifizierschnecke 11 verbunden durch Mittel zum Einleiten des Kunststoffs von der Plastifizierschnecke 11 zur Nebenschnecke 18 und zum Ableiten des mit Fasern verstärkten Kunststoffs von der Nebenschnecke 18 zur Plastifizierschnecke 11. Im gezeigten Ausführungsbeispiel handelt es sich bei diesen Mitteln um zwei in Extrusionsrichtung 15 mit Abstand aufeinanderfolgende Übergangsöffnungen 21 und 22. Die Übergangsöffnungen 21 und 22 sind gebildet durch entsprechende Durchbrüche in den benachbarten Wandungen des Plastifiziergehäuses 13 einerseits und des Nebenschneckengehäuses 19 andererseits.

Die Plastifizierschnecke 11 ist erfindungsgemäß mit einer Sperrzone 23 versehen, die sich zwischen den beiden Übergangsöffnungen 21 und 22 befindet. Gebildet ist die Sperrzone 23 durch eine besondere Geometrie der Schneckenwendel 14 der Plastifizierschnecke 11. Im gezeigten Ausführungsbeispiel ist die Sperrzone 23 gebildet durch eine gegenläufige Steigung der Schneckenwendel 14. Erreicht wird durch die Sperrzone 23, daß der plastifizierte Kunststoff von der Plastifizierschnecke 11 über die in Extrusionsrichtung 15 erste Übergangsöffnung 21 zur Nebenschnecke 18 geleitet wird, weil im Bereich der Sperrzone 23 die Plastifizierschnecke 11 keinen Durchgang des plastifizierten Kunststoffs entlang der Plastifizierschnecke 11 in Extrusionsrichtung 15 zuläßt.

Bei der Plastifizierschnecke 11 ist vorzugsweise die Schneckengeometrie vor der ersten Übergangsöffnung 21 identisch mit der Schneckengeometrie hinter der zweiten Übergangsöffnung 22. Dementsprechend weisen die Schneckenwendel 14 der Plastifizierschnecke 11 vor und hinter der Übergangsöffnung 21 etwa gleiche Steigungen auf. Es ist aber auch denkbar, die Plastifizierschnecke 11 mit einer von der Schneckengeometrie vor der Übergangsöffnung 21 abweichenden Schneckengeometrie hinter der Übergangsöffnung 22 zu versehen.

Die Nebenschnecke 18 verfügt über gegenläufige Schneckenwendel. Ein in Extrusionsrichtung 15 erster Bereich der Nebenschnecke 18 verfügt über eine Schneckenwendel 24, die in Extrusionsrichtung 15 verläuft. Eine darauf folgende, zum verschließbaren Mundstück 16 weisende zweite Schneckenwendel 25 verfügt über einen entgegengesetzten Verlauf, ist nämlich zur Förderung gegen die Extrusionsrichtung 15 ausgebildet. Die gegensinnige Steigung aufweisenden Schneckenwendel 24 und 25 treffen etwa im Bereich der in Extrusionsrichtung 15 vornliegenden, also zum verschließbaren Mundstück 16 weisenden, Übergangsöffnung 22 aufeinander. Im gezeigten Ausführungsbeispiel treffen die Schneckenwendel 24 und 25 der Nebenschnecke 18 am hinteren Ende der Übergangsöffnung 22 aufeinander. Die Schneckengeometrie der in Extrusionsrichtung 15 ersten Schneckenwendel 24 ist derart ausgebildet, daß vor dem Auftreffen der Schneckenwendel 24 auf die entgegengesetzt gerichtete Schneckenwendel 25 ein druckloser Bereich 26 entsteht. Dieser drucklose Bereich 26 beginnt hinter der in Extrusionsrichtung 15 ersten Übergangsöffnung 21 und endet vor der Stelle des Zusammentreffens der unterschiedlich gerichteten Schneckenwendel 24 und 25. Der drucklose Bereich 26 kann darüber hinaus sich auch über den Bereich der in Extrusionsrichtung 15 zweiten Übergangsöffnung 22 erstrecken. Gegebenenfalls kann der drucklose Bereich 26 sogar noch über ein kurzes Stück des in Extrusionsrichtung auf die Sperrzone 23 folgenden Abschnitts der Plastifizierschnecke 11 sich erstrecken.

Erfindungsgemäß verfügt das Nebenschneckengehäuse 19 über eine nach außen weisende Zuführöffnung 29, die in den drucklosen Bereich 26 mündet und dazu dient, Endlosfasern, beispielsweise ein Roving 27, ununterbrochen dem aufgeschmolzenen Kunststoff zuzuführen. Das Roving 27 wird von einer Roving-Rolle 28 kontinuierlich abgezogen und durch die Zuführöffnung 29 im Nebenschneckengehäuse 19 der Nebenschnecke 18 zwischen zwei aufeinanderfolgenden Wendeln zugeführt. Dabei wird das endlose Roving 27 in den aufgeschmolzenen Kunststoff eingearbeitet und imprägniert.

Der Extruder 10 der Fig. 1 weist darüber hinaus einen Vorratsbehälter 30 zur Zufuhr geschnittener Fasern oder anderer Zusätze, wie beispielsweise geschnittene Matten- oder Gewebestücke bzw. Holzmehl, auf. Dieser Vorratsbehälter 30 ist wiederum der Nebenschnecke 18 zugeordnet, und zwar so, daß das Material vom Vorratsbehälter 30 durch das Nebenschneckengehäuse 19 hindurch zur gegen die Extrusionsrichtung 15 fördernden Schneckenwendel 25 gelangt. Dadurch werden die geschnittenen Fasern oder andere Zusätze aus dem Vorratsbehälter 30 zum Material in der in Extrusionsrichtung 15 fördernden Schneckenwendel 24 der Nebenschnecke 18 transportiert und hier mit dem mit Endlosfasern versehenen plastifizierten Kunststoff vereint und vermischt. Dieses Materialgemisch gelangt über die zweite Übergangsöffnung 22 zum hinter der Sperrzone 23 liegenden Abschnitt der Plastifizierschnecke 11, in der das Material weitertransportiert wird zum verschließbaren Mundstück 16.

Das Plastifizieren des Kunststoffs und das Temperieren des Kunststoffs einschließlich der zugeführten Fasern oder dergleichen erfolgt durch schematisch dargestellte Temperierzonen 31 an der Außenseite des Plastifiziergehäuses 13 und des Nebenschneckengehäuses 19.

Das erfindungsgemäße Verfahren läuft beim Extruder 10 wie folgt ab:

Der Kunststoff, bei dem es sich auch bereits um ein Gemisch handeln kann, wird über den Trichter 17 der Plastifizierschnecke 11 zugeführt. Diese fördert den Kunststoff in Extrusionsrichtung 15 bis zur Sperrzone 23. Dabei wird der Kunststoff an Temperierzonen 31 vorbei geführt, die dazu führen, daß er bis zum Erreichen der Sperrzone 23 plastifiziert ist.

Vor der Sperrzone 23 wird dann der Kunststoff umgeleitet, indem er durch die erste Übergangsöffnung 21 zur Nebenschnecke 18 gelangt.

Die Nebenschnecke 18 transportiert den ihr zugeförderten plastifizierten Kunststoff im Bereich des Schneckenwendels 24 in Extrusionsrichtung 15. Dabei erreicht der plastifizierte Kunststoff den drucklosen Bereich 26. Hier werden endlose Fasern, insbesondere das Roving 27, von der Roving-Rolle 28 endlos abgezogen und durch die Zuführöffnung 29 im Nebenschneckengehäuse 19 kontinuierlich der Nebenschnecke 18 zugeführt. Dabei wird das Roving 27 in den plastifizierten Kunststoff eingearbeitet, insbesondere imprägniert.

Weitere Zusätze, beispielsweise geschnittene Fasern, werden dem zum verschließbaren Mundstück 16 weisenden Ende der Nebenschnecke 18 aus dem Vorratsbehälter 30 zugeführt. Durch den sich im Bereich des Vorratsbehälter 30 befindenden Endbereich der Nebenschnecke 18 mit einer gegenläufige Schneckenwendel 25 werden die geschnittenen Fasern entgegen der Extrusionsrichtung 15 zum plastifizierten und mit dem Roving versehenen Kunststoff geleitet und hiermit vermischt. Das entstehende Gemisch gelangt über die zweite Übergangsöffnung 22 aus dem Bereich der Nebenschnecke 18 wieder in den Bereich der Plastifizierschnecke 11, und zwar hinter der Sperrzone 23, also zum dem verschließbaren Mundstück 16 zugewandten zweiten Abschnitt der Plastifizierschnecke 11. Dieser zweite Abschnitt der Plastifizierschnecke 11 transportiert dann den geschmolzenen und mit imprägnierten Fasern und gegebenenfalls anderen Zusätzen versehenen Kuststoff zum verschließbaren Mundstück 16 des Extruders 10, wo bedarfsweise unter Druck der plastifizierte und verstärkte Kunststoff ausgetragen wird.

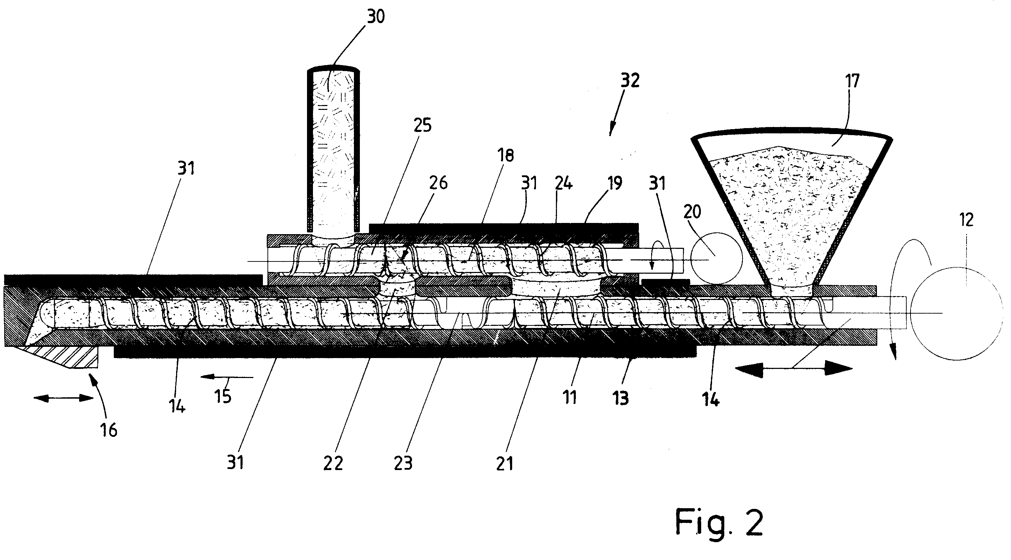

Die Fig. 2 zeigt einen Extruder 32, der dem Extruder 10 im wesentlichen gleicht. Es werden deshalb für gleiche Gegenstände gleiche Bezugsziffern verwendet.

Der Extruder 32 unterscheidet sich vom Extruder 10 dadurch, daß im Bereich der Nebenschnecke 18 nur ein Vorratsbehälter 30 zur Zufuhr geschnittener Fasern, Holzmehl, Gewebestücke oder anderer Zuschläge dient. Mit dem Extruder 32 ist im Bereich der Nebenschnecke 18 geschmolzenem Kunststoff oder einem geschmolzenen Kunststoffgemisch der entsprechende kurzfaserige Zuschlagsstoff zuführbar, wobei der geschmolzene Kunststoff mit dem Zuschlagsstoff durch entgegengesetzt fördernde Schneckenwendel 24 und 25 im Bereich der Übergangsöffnung 22 zur Plastifizierschnecke 12 zusammengeführt und vermischt bzw. imprägniert wird. Dazu kann das der Schneckenwendel 25 zugewandete Ende der Schneckenwendel 24 wiederum einen drucklosen Bereich 26 aufweisen. Jedoch kann beim Extruder 32 wegen der fehlenden Zuführöffnung 29 (Fig. 1) für ein endloses Roving 27 der drucklose Bereich 26 entfallen.

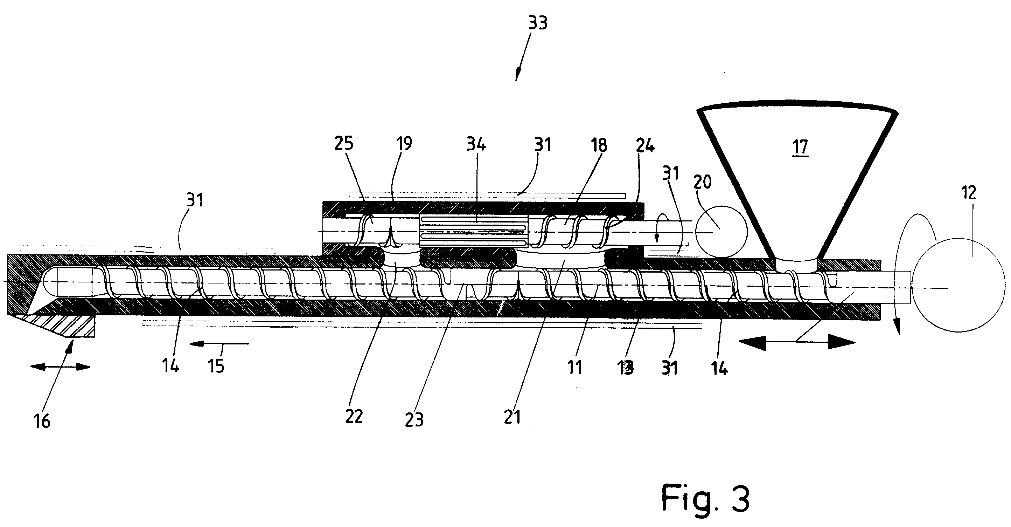

Die Fig. 3 zeigt einen Extruder 33, der auch zum Plastifizieren unverstärkter Kunststoffe geeignet sein kann. Der Extruder 33 entspricht in einem grundsätzlichen Aufbau dem Extruder 10. Deshalb werden auch hier für gleiche Teile gleiche Bezugsziffern verwendet.

Im Gegensatz zum Extruder 10 der Fig. 1 verfügt der Extruder 33 im Bereich der Nebenschnecke 18 über keine Zuführmöglichkeit für irgendwelche Zusätze zum Kunststoff. Vielmehr dient die Nebenschnecke 18 dazu, den Kunststoff bzw. ein Kunststoffgemisch zu dispergieren. Zu diesem Zweck weist die Nebenschnecke 18 eine Dispergierzone 34 auf. Die Dispergierzone 34 erstreckt sich im wesentlichen zwischen den Übergangsöffnungen 21 und 22. Im gezeigten Ausführungsbeispiel ragt die Dispergierzone 34 etwas in den Bereich der ersten Übergangsöffnung 21 hinein. Die Dispergierzone 34 ist so ausgebildet, wie es bereits bei Plastifizierschnecken 11 bekannt ist.

Abweichend von den vorstehend geschilderten Ausführungsbeispielen ist es möglich, die Nebenschnecke wie auch die Plastifizierschnecke als Doppelschnecke auszubilden, die gleich- oder gegenläufig sein kann. Darüber hinaus ist es denkbar, die Nebenschnecke mit einer anderen Drehzahl anzutreiben als die Plastifizierschnecke. Des weiteren ist es denkbar, die Plastifizierschnecke und/oder die Nebenschnecke abweichend von den Darstellungen in der Fig. 3 axialbewegelich auszubilden. Schließlich kann es vorteilhalft sein, die Nebenschnecke und/oder die Plastifizierschnecke mit Mitteln zum Aufschließen bzw. Aufreißen von Matten- oder Gewebestücken bzw. Faserstücken versehen. Dadurch wird die Imprägnierfähigkeit dieser Verstärkungsmaterialien verbessert.

### Bezugszeichenliste:

- 10: Extruder
- 11: Plastifizierschnecke
- 12: Motor
- 13: Plastifiziergehäuse
- 14: Schneckenwendel
- 15: Extrusionsrichtung
- 16: verschließbares Mundstück
- 17: Trichter
- 18: Nebenschnecke
- 19: Nebenschneckengehäuse
- 20: Motor
- 21: Übergangsöffnung
- 22: Übergangsöffnung
- 23: Sperrzone
- 24: Schneckenwendel
- 25: Schneckenwendel
- 26: druckloser Bereich
- 27: Roving
- 28: Roving-Rolle
- 29: Zuführöffnung
- 30: Vorratsbehälter
- 31: Temperierzone
- 32: Extruder
- 33: Extruder
- 34: Dispergierzone

## Patentansprüche

1. Verfahren zur Herstellung eines insbesondere mit Zusätzen wie zum Beispiel Fasern versehenen Kunststoffs, wobei der Kunststoff von einem Extruder plastifiziert wird, **dadurch gekennzeichnet,** daß der Kunststoff zum Dispergieren und/oder zum Zuführen von Zusätzen bereichsweise an einer Plastifizierschnecke (11) des Extruders (10, 32, 33) vorbeigeführt wird.

2. Verfahren nach Anspruch 1, dadurch gekennzeichnet, daß der Kunststoff im Bereich der Plastifizierschnecke (11) plastifiziert und zu einer Nebenschnecke (18) geleitet wird, wobei im Bereich der Nebenschnecke (18) das Dispergieren erfolgt und/oder zur Verstärkung des Kunststoffs dienende Zusätze zugeführt werden.

3. Verfahren nach Anspruch 1 oder 2, dadurch gekennzeichnet, daß mindestens der Kunststoff an einem Teil der Plastifizierschnecke (11) vorbei durch die Nebenschnecke (18) geleitet und im Bereich der Nebenschnecke (18) zusätzlich behandelt wird.

4. Verfahren nach einem der vorhergehenden Ansprüche, dadurch gekennzeichnet, daß in einem drucklosen Bereich (26) mindestens der Nebenschnecke (18) zur Verstärkung dienende Fasern, insbesondere endlose Faserstränge (Rovings 27), zugeführt werden.

5. Verfahren nach einem der vorhergehenden Ansprüche, dadurch gekennzeichnet, daß im wesentlichen im drucklosen Bereich (26) die Fasern in den Kunststoff eingearbeitet werden, insbesondere eine Imprägnierung der Fasern erfolgt.

6. Verfahren zur Herstellung eines Zusätze, insbesondere in Form von Fasern, aufweisenden Kunststoffs, wobei der Kunststoff von einer Plastifizierschnecke eines Extruders plastifiziert wird, dadurch gekennzeichnet, daß dem Kunststoff im Bereich der Plastifizierschnecke mindestens ein Zusatz kontinuierlich zugeführt wird.

7. Verfahren nach Anspruch 6, dadurch gekennzeichnet, daß im Bereich der Plastifizierschnecke dem vorzugsweise teilweise plastifizierten Kunststoff mindestens ein Zusatz in Form von endlosen Fasersträngen, insbesondere Rovings, fortlaufend zugeführt wird.

8. Verfahren nach einem der vorhergehenden Ansprüche, dadurch gekennzeichnet, daß der oder jeder Zusatz, insbesondere endlose Faserstränge und/oder Rovings, dem vorzugsweise plastifizierten Kunststoff in einem drucklosen Bereich der Plastifizierschnecke zugeführt und insbesondere eingearbeitet und/oder impräniert wird.

9. Verfahren nach einem oder mehreren der Ansprüche 1 bis 8, dadurch gekennzeichnet, daß beim Zuführen zur Plastifizierschnecke und/oder Nebenschnecke die endlosen Stränge, insbesondere Faserstränge und/oder Rovings, in endliche Stränge geschnitten werden.

10. Extruder zum Aufschmelzen von Kunststoffen, mit mindestens einer in einem beheizbaren Plastifiziergehäuse (13) angeordneten Plastifizierschnecke (11), gekennzeichnet durch mindestens eine Nebenschnecke (18) und Mittel zum Überleiten mindestens des Kunststoffs von der Plastifizierschnecke (11) zur Nebenschnecke (18) und umgekehrt.

11. Extruder nach Anspruch 10, dadurch gekennzeichnet, daß die Plastifizierschnecke (11) und die Nebenschnecke (18) mit Abstand parallel zueinander verlaufen, und vorzugsweise die Nebenschnecke (18) in einem eigenen Nebenschneckengehäuse (19) angeordnet ist, das mit dem Plastifiziergehäuse (13) in Verbindung steht.

12. Extruder nach einem der vorhergehenden Ansprüche, dadurch gekennzeichnet, daß die Mittel zum Überleiten des Kunststoffs von der Plastifizierschnecke (11) zur Nebenschnecke (18) und umgekehrt als vorzugsweise zwei mit Abstand aufeinanderfolgende Übergangsöffnungen (21, 22) zwischen der Plastifizierschnecke (11) und der Nebenschnecke (18) im Plastifiziergehäuse (13) und im Nebenschneckengehäuse (19) ausgebildet sind.

13. Extruder nach einem der vorhergehenden Ansprüche, dadurch gekennzeichnet, daß die Plastifizierschnecke (11) eine Sperrzone (23) aufweist, die zwischen den mit Abstand aufeinanderfolgenden Übergangsöffnungen (21, 22) angeordnet ist, wobei die Sperrzone (23) vorzugsweise durch eine gegenläufige Schneckenwendelung der Plastifizierschnecke (11) gebildet ist.

14. Extruder nach einem der vorhergehenden Ansprüche, dadurch gekennzeichnet, daß die Nebenschnecke (18) mindestens eine Zuführung für Zusätze, insbesondere Fasern oder dergleichen, aufweist, wobei die Zuführung vorzugsweise als eine nach außen offene Zuführöffnung (29) für Faserstränge (Rovings 27) im Nebenschneckengehäuse (19) ausgebildet ist.

15. Extruder nach einem der vorhergehenden Ansprüche, dadurch gekennzeichnet, daß eine Zuführung als eine zur Zufuhr kurzer, insbesondere geschnittener, Fasern dienende Öffnung in dem Schneckengehäuse (19) ausgebildet ist.

16. Extruder nach einem der vorhergehenden Ansprüche, dadurch gekennzeichnet, daß im Bereich mindestens einer Zuführung zur Nebenschnecke (18) ein druckloser Bereich (26) angeordnet ist, der vorzugsweise durch eine besonders gestaltete Geometrie der Nebenschnecke (18) gebildet ist.

17. Extruder nach einem der vorhergehenden Ansprüche, dadurch gekennzeichnet, daß der drucklose Bereich (26) so ausgebildet ist, daß kein Kunststoff durch die nach außen offene Zuführöffnung (29) im Nebenschneckengehäuse (19) austreten kann und/oder der Kunststoff und die Faser durch die Übergangsöffnung (22) zur Plastifzierschnecke (11) strömen können.

18. Extruder nach einem der vorhergehenden Ansprüche, dadurch gekennzeichnet, daß die Nebenschnecke (18) eine Behandlungszone, insbesondere eine Dispergierzone (34), aufweist, wobei die Dispergierzone (34) vorzugsweise zwischen den aufeinanderfolgenden Übergangsöffnungen (21, 22) zwischen der Plastifizierschnecke (11) und der Nebenschnecke (18) angeordnet ist.

19. Extruder nach einem der vorhergehenden Ansprüche, dadurch gekennzeichnet, daß ein in Extrusionsrichtung (15) auf die Dispergierzone (34) folgender Abschnitt der Nebenschnecke (18) eine gegenläufige Schneckenwendel aufweist.
